# FASCICULE DE BREVET EUROPEEN

(11) **EP 1 053 409 B1**
(45) Date de publication et mention de la délivrance du brevet: **03.07.2002**
(21) Numéro de dépôt: 99902629.7
(22) Date de dépôt: 08.02.1999
(51) Int. Cl.: F16D 55/227

(54) **FREIN A DISQUE A REACTION EQUILIBREE**
SCHEIBENBREMSE MIT AUSGEGLICHENER REAKTION
DISK BRAKE WITH BALANCED REACTION

(30) Priorité: 12.02.1998 FR 9801663
(43) Date de publication de la demande: 22.11.2000
(73) Titulaire: Bosch Systemes de Freinage, 93700 Drancy (FR)
(72) Inventeur: GAUTIER, Jean-Pierre, F-93600 Aulnay-sous-Bois (FR)
(74) Mandataire: Hurwic, Aleksander Wiktor
(86) Numéro de dépôt international: FR9900285
(87) Numéro de publication internationale: WO9941518

(56) Documents cités:
- WO-A-94/24452
- US-A- 4 319 668
- US-A- 5 564 532

## Description

La présente invention concerne un frein à disque pour véhicule à moteur.

Plus précisément, la présente invention concerne un frein à disque du type de ceux qui comprennent : un disque présentant une face interne et une face externe, ce disque tournant autour d'un axe transversal suivant un sens de rotation direct pour une marche avant du véhicule; une chape comprenant une branche amont et une branche aval chevauchant le disque et solidaires d'une base commune fixée au véhicule en regard de la face interne du disque, la branche aval succédant à la branche amont dans le sens de rotation direct du disque, et chaque branche présentant un logement interne et un logement externe situés de part et d'autre du disque; un étrier chevauchant le disque et monté coulissant par rapport à la chape, suivant une direction transversale parallèle à l'axe transversal, cet étrier comprenant une mâchoire tournée vers la face externe du disque et un cylindre fermé par un piston et tourné vers la face interne du disque; des premier et second moyens de guidage, respectivement prévus sur la chape et sur l'étrier, l'un des moyens de guidage étant constitué par un premier alésage et l'autre par une première colonnette coulissant dans le premier alésage; et une paire de patins de friction formée d'un patin interne et d'un patin externe respectivement disposés, suivant la direction transversale, entre le piston et la face interne du disque, et entre la face externe du disque et la mâchoire de l'étrier, le patin interne présentant une extrémité amont et une extrémité aval montées coulissantes dans les logements internes respectifs des branches amont et aval, et le patin externe présentant une extrémité amont et une extrémité aval montées coulissantes dans les logements externes respectifs des branches amont et aval, les patins interne et externe portant, entre leurs extrémités respectives, des garnitures de friction respectives tournées vers les faces interne et externe du disque et par l'intermédiaire desquelles chaque patin reçoit une sollicitation du disque dans le sens de rotation direct en cas de freinage en marche avant du véhicule, un premier et un second au moins des logements interne et externe des branches amont et aval formant des butées pour les extrémités respectives des patins, propres à s'opposer à un mouvement des patins interne et externe dans le sens de rotation direct.

Des freins à disque de ce type sont bien connus dans l'art antérieur, comme le montrent par exemple les documents de brevets EP-A-0 830 519, EP-A-0 694 131, et EP-A-0 694 133.

On connaît également, du document US-A-4 319 668, un frein à disque dans lequel l'un des patins peut être agencé de manière à être en butée sur la branche aval tandis que l'autre patin est agencé de façon à solliciter en traction la branche amont de la chape.

L'un des nombreux problèmes qui se posent dans la conception des freins à disque réside dans la difficulté d'absorber les forces d'entraînement transmises aux patins par le disque, sans que les déformations de la chape qui en résultent nécessairement engendrent une résistance s'opposant au coulissement satisfaisant de l'étrier par rapport à la chape, une telle résistance étant elle-même génératrice d'usure anormale et dissymétrique des patins, de risque de blocage du frein, d'augmentation de l'absorption de liquide de frein, de bruit, etc.

L'invention se situe dans ce contexte et a pour but de proposer un frein à disque capable de se déformer sans anomalie fonctionnelle notable.

A cette fin, le frein de l'invention, par ailleurs conforme au préambule ci-dessus, est essentiellement caractérisé en ce que, pour une sollicitation des patins suivant le sens de rotation direct, un premier seulement des logements interne et externe de la branche amont forme une butée amont pour l'extrémité amont d'un premier seulement des patins interne et externe, tandis qu'un second seulement des logements externe et interne respectivement de la branche aval forme une butée aval pour l'extrémité aval d'un second seulement des patins externe et interne respectivement, en ce que la branche amont présente une première raideur pour une force appliquée sur la butée amont, en ce que la branche aval présente une seconde raideur pour une force appliquée sur la butée aval, et en ce que le rapport des première et seconde raideurs est compris entre 0,80 et 1,25.

Autrement dit, le frein à disque de l'invention est tel que chacune des branches amont et aval offre une butée à l'un des patins interne et externe, que chacun des patins ne vienne en butée que sur l'une des branches, et que les branches amont et aval présentent des raideurs au moins voisines, le rapport de ces dernières étant d'ailleurs préférablement compris entre 0,95 et 1,05.

Dans un mode de réalisation possible de l'invention, le premier logement est le logement interne de la branche amont alors que le second logement est le logement externe de la branche aval, et l'extrémité amont du patin interne présente un profil de retenue par lequel cette extrémité amont est accrochée sur la butée amont du logement interne de la branche amont, l'extrémité aval du patin externe étant quant à elle en appui sur la butée aval du logement externe de la branche aval.

Compte tenu de la géométrie généralement adoptée pour la chape, et selon laquelle les branches amont et aval sont reliées à la base de la chape par des ponts amont et aval respectifs, il peut être avantageux, selon l'invention, de prévoir que le pont qui relie à la base de la chape la branche dont un logement forme une butée pour le patin interne ait une section inférieure à la section du pont qui relie à la base de la chape la branche dont un logement forme une butée pour le patin externe.

Si l'extrémité inférieure du pont amont est définie comme étant celle qui jouxte la base de la chape et si l'extrémité supérieure du pont amont est définie comme étant celle qui est distante de la base, il est en outre avantageux de faire en sorte que le premier moyen de guidage soit disposé à l'extrémité supérieure du pont amont.

De préférence, la première colonnette pénètre dans le premier alésage par une ouverture du premier alésage qui est située dans un demi-espace, délimité par le disque, où se situe la butée amont.

Le frein à disque de l'invention peut aussi comprendre des troisième et quatrième moyens de guidage respectivement prévus sur la chape et sur l'étrier et dont l'un est un second alésage et l'autre une seconde colonnette coulissant dans le second alésage, la seconde colonnette pénètrant dans le second alésage par une ouverture du second alésage qui est située dans un même demi-espace que la butée aval.

Enfin, il peut également être utile de prévoir que les branches amont et aval soient seulement reliées entre elles par la base de la chape.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue de dessus et partiellement en coupe d'un frein à disque du type de ceux auxquels s'applique la présente invention;
- la figure 2 est une vue de dessus schématique illustrant le comportement des patins et du disque dans un frein à disque de l'art antérieur;
- la figure 3 est une vue de face schématique d'un frein à disque conforme à l'invention, observé depuis le véhicule sur lequel il est monté;
- la figure 4 est une vue de dessus schématique d'un frein à disque conforme à l'invention;
- la figure 5 est une vue en perspective d'une chape d'un frein à disque conforme à l'invention, observée depuis le véhicule sur lequel ce frein est monté; et
- la figure 6 est une vue en perspective d'une chape d'un frein à disque conforme à l'invention, observée de l'extérieur du véhicule sur lequel ce frein est monté.

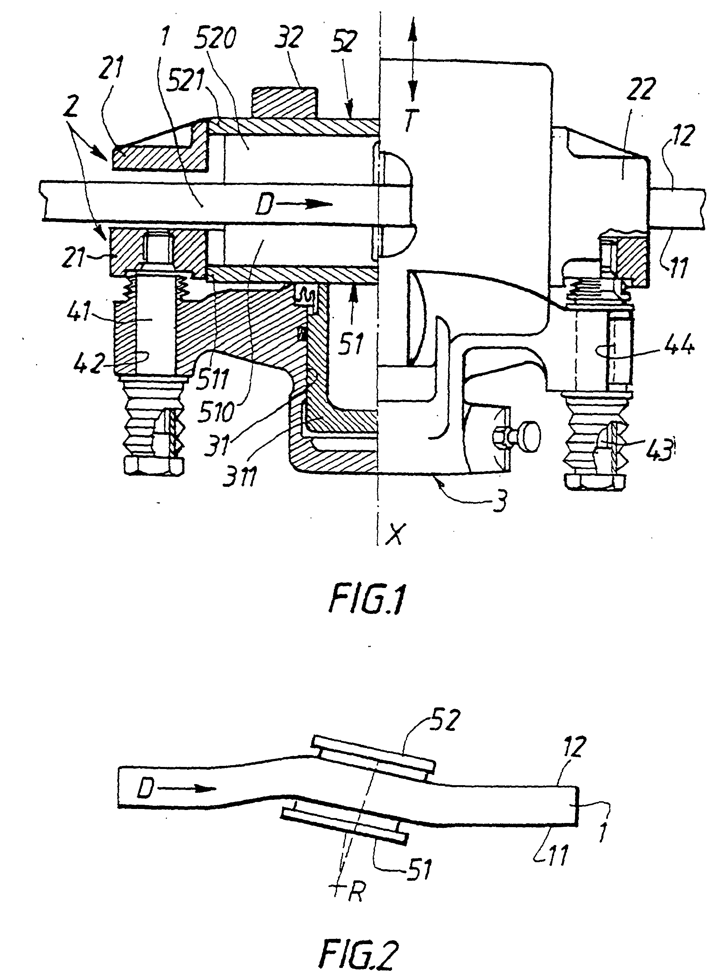

Comme le montre la figure 1, l'invention concerne un frein à disque pour véhicule à moteur, du type de ceux qui comprennent de façon connue un disque 1, une chape 2, un étrier 3, des moyens de guidage 41, 42, 43, 44 prévus sur la chape 2 et sur l'étrier 3, et une paire de patins de friction formée d'un patin interne 51 et d'un patin externe 52.

Le disque 1 présente une face interne 11 et une face externe 12 et est entraîné, avec une roue du véhicule, en rotation autour d'un axe transversal X suivant un sens de rotation direct D pour une marche avant du véhicule.

La chape 2 comprend une branche amont 21 et une branche aval 22 qui chevauchent toutes les deux le disque 1 et qui sont solidaires d'une base commune 23 de la chape, cette dernière étant fixée au véhicule en regard de la face interne 11 du disque, par exemple au moyen de vis insérées dans des orifices 231 et 232.

Par convention, la branche aval 22 est ici définie comme étant celle qui succéde à l'autre, dite "branche amont 21", dans le sens de rotation direct D du disque.

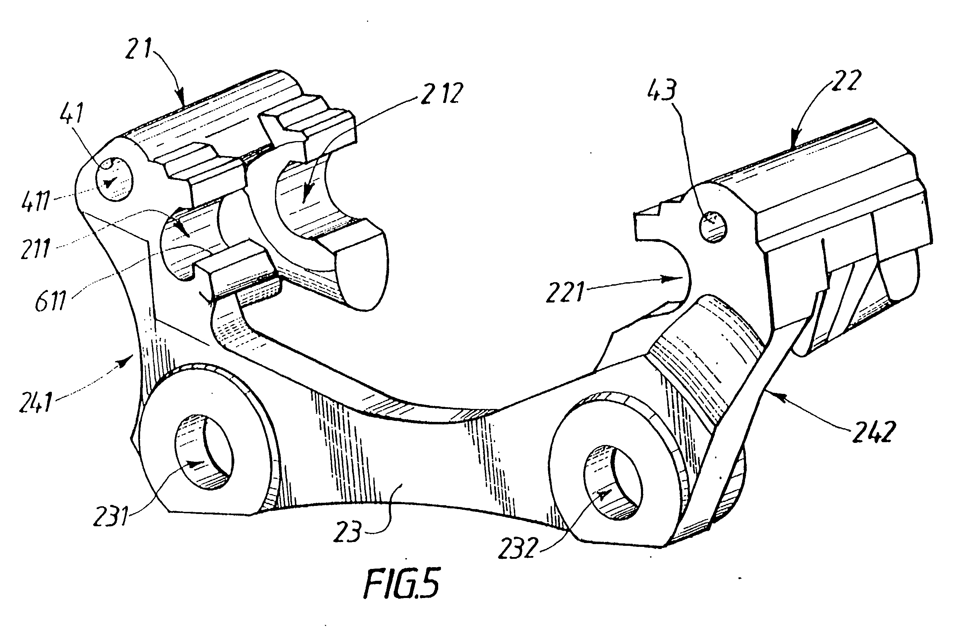

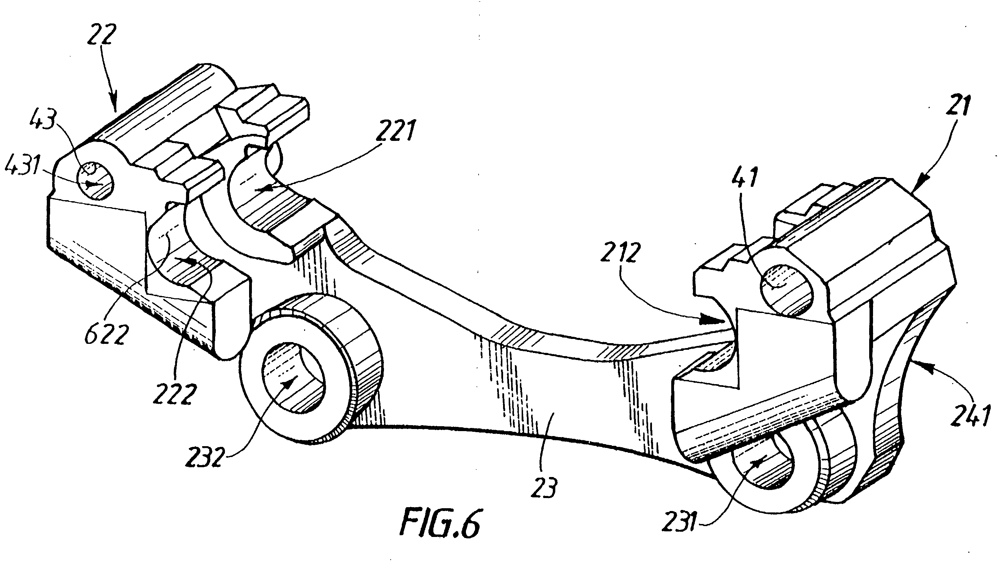

En outre, comme le montrent le mieux les figures 5 et 6, chaque branche présente un logement interne 211, 221 et un logement externe 212, 222, situés de part et d'autre du disque 1.

L'étrier 3, qui chevauche le disque 1 également, est monté coulissant par rapport à la chape 2, suivant une direction transversale T parallèle à l'axe transversal X.

Cet étrier 3, qui joue le rôle de pince, comprend essentiellement une mâchoire 32 tournée vers la face externe 12 du disque, et un cylindre 31 situé du côté de la face interne 11 du disque et fermé par un piston 311.

Les moyens de guidage 41, 42, 43, et 44 sont constituées en paires, chaque paire comprenant un alésage et une colonnette montée coulissante dans cet alésage.

Comme le montre la figure 1, les moyens de guidage 41 et 43 prévus sur la chape peuvent être constitués des colonnettes, les moyens de guidage 42 et 44 prévus sur l'étrier 3 étant alors constitués d'alésages.

Cependant, il est également possible de faire en sorte que les moyens de guidage 41 et 43 prévus sur la chape soient constitués des alésages, comme le montrent les figures 5 et 6, l'étrier étant alors muni de colonnettes, ou encore de prévoir que la chape et fétrier soient tous deux dotés d'un alésage et d'une colonnette.

En revanche, la disposition de ces moyens de guidage par rapport aux logements 211, 221, 212, 222 peut, selon l'invention, être optimisée d'une façon qui sera décrite ultérieurement.

Le patin interne 51 est disposé, suivant la direction transversale T, entre le piston 311 et la face interne 11 du disque, et présente une extrémité amont 511 et une extrémité aval 512 montées coulissantes dans les logements internes respectifs 211, 221 des branches amont et aval 21, 22.

De façon similaire, le patin externe 52 est disposé entre la face externe 12 du disque et la mâchoire 32 de l'étrier, et présente une extrémité amont 521 et une extrémité aval 522 montées coulissantes dans les logements externes respectifs 212, 222 des branches amont et aval 21, 22.

Par ailleurs, les patins interne et externe 51, 52 portent, entre leurs extrémités respectives, des garnitures de friction 510, 520, la garniture 510 du patin interne étant tournée vers la face interne 11 du disque 1, et la garniture 520 du patin externe étant tournée vers la face externe 12 du disque.

Lorsque du liquide de frein sous pression est injecté dans le cylindre 31 et repousse vers le disque 1 le piston 311, ce dernier applique le patin 51 contre la face interne 11 du disque, ce dont il résulte que le cylindre 31 est contraint à s'éloigner du disque jusqu'à ce que la mâchoire 32 applique le patin externe 52 sur la face externe 12 du disque avec une force équivalente.

Si, lors de cette opération, le véhicule roule en marche avant, les patins 51 et 52 reçoivent donc de la part du disque, et par l'intermédiaire de leurs garnitures 510 et 520 qui frottent sur ce dernier, une sollicitation dans le sens de rotation direct D.

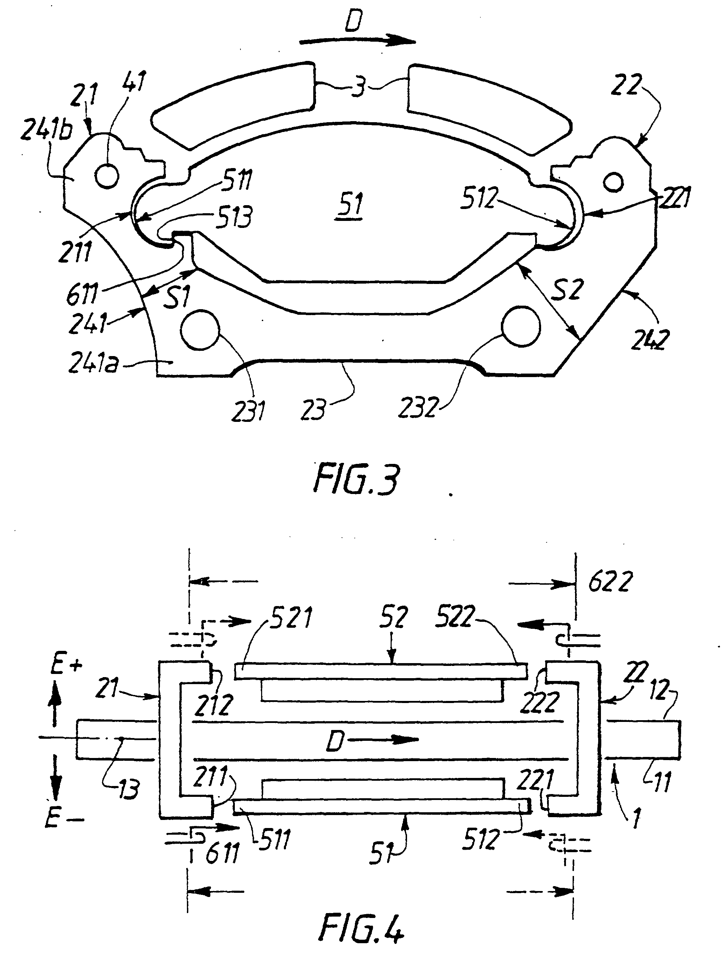

Un défaut répandu des freins à disque connus est de conduire, au moins pour des valeurs relativement élevées de cette sollicitation, à une déformation du disque, telle qu'illustrée, de façon à dessein très exagérée, par la figure 2.

En effet, comme les efforts reçus de la part du disque par les patins doivent en définitive être transmis au châssis du véhicule par l'intermédiaire de la chape, et comme cette dernière n'est fixée au véhicule que du côté du patin interne 51, la tendance naturelle de la chape et de l'étrier est de tourner autour d'un axe de rotation fictif R situé du côté du véhicule.

Ce mouvement, qui s'accompagne d'un déplacement plus grand du patin extérieur 52 que du patin intérieur 51 dans le sens direct D provoque un voilage élastique du disque, lequel a tendance à s'aggraver par rétroaction positive du phénomène et à déformer le frein d'une façon telle que le coulissement de l'étrier par rapport à la chape s'en trouve dégradé.

Quoiqu'il en soit, comme la chape a notamment pour rôle de maintenir les patins par rapport au disque, donc en l'occurrence d'opposer une résistance élastique au mouvement des patins dans le sens de rotation direct D, chaque patin prend alors nécessairement appui sur la chape, soit parce que son extrémité amont est retenue par le logement correspondant de la branche amont 21, soit parce que son extrémité aval est retenue par le logement correspondant de la branche aval 22, soit encore parce que chacune de ses extrémités est retenue par le logement correspondant de la branche correspondante, comme le préconise par exemple le document de brevet EP-0 694 133 cité en préambule.

Le frein à disque de l'invention se distingue de l'art antérieur notamment par le fait que, pour une sollicitation des patins suivant le sens de rotation direct D, un premier seulement des logements interne et externe 211, 212 de la branche amont 21 forme une butée amont 611 pour l'extrémité amont d'un premier seulement des patins interne et externe 51, 52, tandis qu'un second seulement des logements interne et externe 221, 222 de la branche aval 22 forme une butée aval 622 pour l'extrémité aval d'un second seulement des patins interne et externe 51, 52.

En d'autres termes, chacune des branches amont et aval 21, 22 offre une butée à l'un des patins interne et externe 51, 52, et chacun de ces patins ne prend appui que sur l'une de ces branches.

Ces caractéristiques sont illustrées de façon symbolique sur la figure 4, qui contient deux types de pictogrammes, à savoir un pictogramme P_{traction} formé d'une flèche qui tire un verrou engagé dans un crochet, ce pictogramme étant par exemple celui qui est associé à la butée amont 611, et un pictogramme P_{poussée} formé d'une flèche qui bute contre une paroi, ce pictogramme étant par exemple celui qui est associé à la butée aval 622.

Le pictogramme P_{traction} symbolise le mode de transmission d'effort par accrochage qu'illustre la figure 3 pour l'extrémité amont 511 du patin interne 51, ce dernier présentant un profil de retenue 513 par lequel cette extrémité amont 511 est accrochée sur la butée amont 611 du logement interne 211 de la branche amont 21.

Le pictogramme P_{poussée} symbolise quant à lui un mode de transmission d'effort par appui, plus précisément celui qui est en l'occurrence applicable à l'extrémité aval 522 du patin externe 52, qui pousse contre la butée aval 622 du logement externe 222 de la branche aval 22 lorsque ce patin externe est entraîné par le disque 1 dans le sens de rotation direct D.

Les pictogrammes P_{traction} et P_{poussée} apparaissant sur la figure 4 se distinguent en outre les uns des autres par des caractères graphiques supplémentaires, à savoir le sens de leur flèche, et la nature du trait (trait plein ou pointillés) qui les représente, ces caractères graphiques ayant pour seule finalité de permettre une totale compréhension de l'invention.

Compte tenu de l'ensemble de ces conventions, l'un des aspects majeurs de l'invention est que les modes de transmission d'effort représentés par des pictogrammes en traits pleins sont incompatibles avec les modes de transmission d'effort représentés par des pictogrammes en pointillés, c'est-à-dire qu'ils ne doivent pas être utilisés dans un même frein, les pictogrammes en traits pleins étant en revanche compatibles entre eux, de même que les pictogrammes en pointillés.

Par ailleurs, si l'on ne considère pour l'instant que les pictogrammes en traits pleins, ceux dont la flèche est orientée suivant le sens direct D illustrent le mode de transmission d'effort entre les patins et la chape lorsque le disque 1 tourne dans le sens direct D, alors que ceux dont la flèche est tournée en sens contraire du sens direct D illustrent le mode de transmission d'effort entre les patins et la chape lorsque le disque 1 tourne en sens inverse du sens direct D, la signification attribuée au sens des flèches étant évidemment la même pour les pictogrammes en pointillés.

Compte tenu cependant du fait que la vitesse maximale d'un véhicule en marche avant est très supérieure à la vitesse maximale du même véhicule en marche arrière, l'invention ne s'intéresse essentiellement qu'aux modes de transmission d'effort pour le sens de rotation direct D du disque, c'est-à-dire pour la marche avant du véhicule, le choix des modes de transmission d'effort pour la marche arrière du véhicule étant moins critique.

En résumé, la figure 4 indique donc :
- que dans un premier mode de réalisation possible de l'invention, le patin interne 51 doit être accroché par son extrémité amont 511 au logement interne amont 211 sans que son extrémité aval 512 ne vienne appuyer contre une butée du logement interne aval 221, tandis que le patin externe 52 doit venir appuyer par son extrémité aval 522 contre une butée 622 du logement externe aval 222 sans que son extrémité amont 521 ne soit accrochée au logement externe amont 212;
- que dans un second mode de réalisation possible de l'invention, le patin externe 52 doit être accroché par son extrémité amont 521 au logement externe amont 212 sans que son extrémité aval 522 ne vienne appuyer contre une butée du logement externe aval 222, tandis que le patin interne 51 doit venir appuyer par son extrémité aval 512 contre une butée du logement interne aval 221 sans que son extrémité amont 511 ne soit accrochée au logement interne amont 211;
- que dans le premier mode de réalisation de l'invention, il est en outre possible de prévoir que pour la marche arrière du véhicule, le patin externe 52 soit accroché par son extrémité 522 au logement externe 222 sans que son extrémité 521 ne vienne appuyer contre une butée du logement externe 212, tandis que le patin interne 51 vient appuyer par son extrémité 511 contre une butée du logement interne 211 sans que son extrémité 512 ne soit accrochée au logement interne 221; et
- que dans le second mode de réalisation de l'invention, il est en outre possible de prévoir que pour la marche arrière du véhicule, le patin interne 51 soit accroché par son extrémité 512 au logement interne 221 sans que son extrémité 511 ne vienne appuyer contre une butée du logement interne 211, tandis que le patin externe 52 vient appuyer par son extrémité 521 contre une butée du logement externe 212 sans que son extrémité 522 ne soit accrochée au logement externe 222.

Un autre aspect essentiel de l'invention est que, si K1 désigne la raideur de la branche amont 21 pour une force appliquée sur la butée amont 611, et si K2 désigne la raideur de la branche aval 22 pour une force appliquée sur la butée aval 622, alors le rapport K1/K2 de ces raideurs doit être compris entre 0,80 et 1,25, c'est-à-dire que les branches amont et aval doivent présentent des raideurs au moins voisines, ces raideurs étant de préférence aussi proches l'une de l'autre que possible, et par exemple telles que leur rapport K1/K2 soit plutôt compris entre 0,95 et 1,05.

Grâce à ces caractéristiques, qui conferent au patin interne 51 une mobilité comparable à celle du patin externe 52 vis-à-vis de leur entraînement commun par le disque 1, donc qui garantissent un déplacement simultané et équivalent de ces patins lors du freinage, le phénomène décrit en référence à la figure 2, et l'ensemble de ses conséquences négatives, peuvent être évités.

Comme le montrent les figures 5 et 6, les branches amont et aval 21, 22 sont reliées à la base 23 de la chape par des ponts amont et aval respectifs 241, 242.

Un premier de ces ponts, en l'occurrence le pont amont 241 sur les figures, sert à relier à la base 23 de la chape la branche dont un logement forme une butée pour le patin interne 51, c'est-à-dire en l'occurrence la branche amont 21 dont le logement 211 porte la butée 611.

Le second des ponts amont et aval, en l'occurrence le pont aval 242 sur les figures, sert à relier à la base 23 de la chape la branche dont un logement forme une butée pour le patin externe 52, c'est-à-dire en l'occurrence la branche aval 22 dont le logement 222 porte la butée 622.

Dans ces conditions, comme la butée externe 622 est par construction plus éloignée du véhicule que la butée interne 611, un moyen avantageux pour remplir la condition que doit satisfaire le rapport K1/K2, au moins si la chape est réalisée avec un seul matériau, consiste à donner aux premier et second ponts des sections S1 et S2 différentes et telles que la section S2 du second pont soit supérieure à la section S1 du premier pont (voir figure 3).

Dans le mode de réalisation illustré aux figures 3, 5, et 6, et dans lequel le pont amont 241 présente une extrémité inférieure 241a jouxtant la base 23 de la chape et une extrémité supérieure 241b distante de la base 23, le moyen de guidage 41 prévu sur la chape, en l'occurrence l'alésage 41, est avantageusement disposé à l'extrémité supérieure 241b du pont amont 241, de sorte que l'étrier puisse suivre sans avance ni retard le mouvement du patin interne 51.

Une autre caractéristique avantageuse de l'invention peut être définie en considérant (voir figure 4) que le disque 1 délimite, par exemple par son plan médian 13, deux demi-espaces E+, E- dont chacun est tourné vers une face correspondante 11, 12 du disque.

Dans ces conditions, il est préférable que la première colonnette, c'est-à-dire celui des premier et second moyens de guidage qui est une colonnette, pénètre dans le premier alésage par une ouverture du premier alésage qui est située dans le même demi-espace que la butée amont.

Par exemple, dans le mode de réalisation des figures 3, 5 et 6, qui prévoit que le premier moyen de guidage 41, c'est-à-dire le moyen de guidage qui est associé à la chape 2, est un alésage, et que le second moyen de guidage 42, c'est-à-dire celui qui est associé à l'étrier 3, est une colonnette, il est préférable que la colonnette 42 pénètre dans l'alésage 41 par une ouverture 411 qui est située dans le même demi-espace E- que la butée amont 611.

De façon similaire, lorsque le frein à disque de l'invention comprend, en tant que moyens de guidage supplémentaires, un second alésage 43 et une seconde colonnette 44 coulissant dans ce second alésage 43, il est préférable que cette seconde colonnette 44 pénètre dans le second alésage 43 par une ouverture 431 de ce dernier, située dans le même demi-espace E+ que la butée aval 622.

Enfin, comme le montrent les figures 5 et 6, il est également avantageux de prévoir que les branches amont et aval 21, 22 ne soient reliées entre elles que par la base 23 de la chape, de manière à faciliter la conception de la chape en évitant toute interaction forte entre le mouvement de la butée amont 611 et le mouvement de la butée aval 622.

## Revendications

1. Frein à disque pour véhicule à moteur, comprenant : un disque (1) présentant une face interne (11) et une face externe (12), ce disque tournant autour d'un axe transversal (X) suivant un sens de rotation direct (D) pour une marche avant du véhicule; une chape (2) comprenant une branche amont (21) et une branche aval (22) chevauchant le disque (1) et solidaires d'une base commune (23) fixée au véhicule en regard de la face interne (11) du disque, la branche aval (22) succédant à la branche amont (21) dans le sens de rotation direct (D) du disque, et chaque branche présentant un logement interne (211, 221) et un logement externe (212, 222) situés de part et d'autre du disque (1); un étrier (3) chevauchant le disque (1) et monté coulissant par rapport à la chape (2), suivant une direction transversale (T) parallèle à l'axe transversal (X), cet étrier (3) comprenant une mâchoire (32) tournée vers la face externe (12) du disque, et un cylindre (31) fermé par un piston (311) et tourné vers la face interne (11) du disque; des premier et second moyens de guidage (41, 42) respectivement prévus sur la chape (2) et sur l'étrier (3), l'un des moyens de guidage (41, 42) étant constitué par un premier alésage, et l'autre par une première colonnette coulissant dans le premier alésage; et une paire de patins de friction formée d'un patin interne (51) et d'un patin externe (52) respectivement disposés, suivant la direction transversale (T), entre le piston (311) et la face interne (11) du disque, et entre la face externe (12) du disque et la mâchoire (32) de l'étrier, le patin interne (51) présentant une extrémité amont (511) et une extrémité aval (512) montées coulissantes dans les logements internes respectifs (211, 221) des branches amont et aval (21, 22), et le patin externe (52) présentant une extrémité amont (521) et une extrémité aval (522) montées coulissantes dans les logements externes respectifs (212, 222) des branches amont et aval (21, 22), les patins interne et externe (51, 52) portant, entre leurs extrémités respectives, des garnitures de friction respectives (510, 520) tournées vers les faces interne et externe (11, 12) du disque et par l'intermédiaire desquelles chaque patin reçoit une sollicitation du disque dans le sens de rotation direct (D) en cas de freinage en marche avant du véhicule, un premier et un second au moins desdits logements interne et externe (211, 212, 221, 222) des branches amont et aval (21, 22) formant des butées (611, 622) pour les extrémités respectives des patins, propres à s'opposer à un mouvement des patins interne et externe dans le sens de rotation direct (D), **caractérisé en ce que**, pour une sollicitation des patins suivant le sens de rotation direct (D), un premier seulement des logements interne et externe (211, 212) de la branche amont (21) forme une butée amont (611) pour l'extrémité amont d'un premier seulement des patins interne et externe (51, 52), tandis qu'un second seulement des logements externe et interne (222, 221) respectivement, de la branche aval (22) forme une butée aval (622) pour l'extrémité aval d'un second seulement des patins externe et interne (52, 51) respectivement, **en ce que** la branche amont (21) présente une première raideur (K1) pour une force appliquée sur la butée amont (611), **en ce que** la branche aval (22) présente une seconde raideur (K2) pour une force appliquée sur la butée aval (622), et **en ce que** le rapport (K1/K2) des première et seconde raideurs est compris entre 0,80 et 1,25.

2. Frein à disque suivant la revendication 1, **caractérisé en ce que** le rapport (K1/K2) des première et seconde raideurs (K1, K2) est compris entre 0,95 et 1,05.

3. Frein à disque suivant la revendication 1 ou 2, **caractérisé en ce que** le premier logement est le logement interne (211) de la branche amont (21), **en ce que** le second logement est le logement externe (222) de la branche aval (22), et **en ce que** l'extrémité amont (511) du patin interne (51) présente un profil de retenue (513) par lequel cette extrémité amont (511) est accrochée sur la butée amont (611) du logement interne (211) de la branché amont (21), et **en ce que** l'extrémité aval (522) du patin externe (52) est en appui sur la butée aval (622) du logement externe (222) de la branche aval (22).

4. Frein à disque suivant la revendication 1 ou 2, **caractérisé en ce que** les branches amont et aval (21, 22) sont reliées à la base (23) de la chape par des ponts amont et aval respectifs (241, 242) présentant des sections (S1, S2) différentes, un premier des ponts amont et aval reliant à la base (23) la branche dont un logement forme une butée pour le patin interne (51), et un second des ponts amont et aval reliant à la base (23) la branche dont un logement forme une butée pour le patin externe (52), le premier pont ayant une section inférieure à la section du second pont.

5. Frein à disque suivant la revendication 4, **caractérisé en ce que** le pont amont (241) présente une extrémité inférieure (241a) jouxtant la base (23) de la chape et une extrémité supérieure (241b) distante de la base (23), et **en ce que** le premier moyen de guidage (41) est disposé à l'extrémité supérieure (241b) du pont amont.

6. Frein à disque suivant l'une quelconque des revendications précédentes, **caractérisé en ce que** le disque délimite deux demi-espaces (E+, E-) dont chacun est tourné vers une des deux faces (11, 12) du disque, et **en ce que** la première colonnette pénètre dans le premier alésage par une ouverture (411) du premier alésage qui est située dans le demi-espace (E+, E-) où se situe la butée amont (611).

7. Frein à disque suivant l'une quelconque des revendications précédentes, **caractérisé en ce qu'**il comprend des troisième et quatrième moyens de guidage (43, 44) respectivement prévus sur la chape (2) et sur l'étrier (3) et dont l'un est un second alésage et l'autre une seconde colonnette coulissant dans le second alésage, et **en ce que** la seconde colonnette pénètre dans le second alésage par une ouverture (431) du second alésage qui est située dans le demi-espace (E+, E-) où se situe la butée aval (622).

8. Frein à disque suivant l'une quelconque des revendications précédentes, **caractérisé en ce que** les branches amont et aval (21, 22) sont seulement reliées entre elles par la base (23) de la chape.

## Patentansprüche

1. Scheibenbremse für ein Kraftfahrzeug, mit: einer Scheibe (1), die eine Innenseite (11) und eine Außenfläche (12) aufweist, wobei sich diese Scheibe um eine Querachse (X) in einer direkten Drehrichtung (D) bei Vorwärtsfahrt des Fahrzeugs dreht; einem Halter (2), der einen vorderen Schenkel (21) und einen hinteren Schenkel (22) aufweist, welche die Scheibe (1) umgreifen und fest mit einer gemeinsamen Basis (23) verbunden ist, die am Fahrzeug gegenüber der Innenseite (11) der Scheibe befestigt ist, wobei der hintere Schenkel (22) auf den vorderen Schenkel (21) in der direkten Drehrichtung (D) der Scheibe folgt und wobei jeder Schenkel eine Innenaufnahme (211, 221) und eine Außenaufnahme (212, 222) aufweist, die auf der einen und der anderen Seite der Scheibe (1) angeordnet sind; einem Bremssattel (3), der die Scheibe (1) umgreift und bezüglich des Halters (2) entlang einer zur Querachse (X) parallelen Querrichtung (T) verschiebbar angebracht ist, wobei der Bremssattel (3) eine Backe (32) aufweist, die zur Außenseite (12) der Scheibe gerichtet ist, und einen Zylinder (31), der von einem Kolben (311) geschlossen und zur Innenseite (11) der Scheibe gerichtet ist; ersten und zweiten Führungsmitteln (41, 42), die an dem Halter (2) bzw. dem Bremssattel (3) vorgesehen sind, wobei eines der Führungsmittel (41, 42) durch eine erste Bohrung gebildet ist und das andere durch eine erste Stange, die in der ersten Bohrung gleitet; und einem Paar von Bremsklötzen, das von einem inneren Bremsklotz (51) und einem äußeren Bremsklotz (52) gebildet ist, die entlang der Querrichtung (T) zwischen dem Kolben (311) und der Innenseite (11) der Scheibe bzw. zwischen der Außenseite (12) der Scheibe und der Backe (32) des Bremssattels angeordnet sind, wobei der innere Bremsklotz ein vorderes Ende (511) und ein hinteres Ende (512) aufweist, die verschiebbar in den entsprechenden Innenaufnahmen (211, 221) des vorderen und des hinteren Schenkels (21, 22) aufgenommen sind, und wobei der äußere Bremsklotz (52) ein vorderes Ende (521) und ein hinteres Ende (522) aufweist, die verschiebbar in entsprechenden Außenaufnahmen (212, 222) des vorderen und des hinteren Schenkels (21, 22) angebracht sind, wobei der innere und der äußere Bremsklotz (51, 52) zwischen ihren entsprechenden Enden entsprechende Reibbeläge (510, 520) aufweisen, die zu der Innenseite (11) und der Außenseite (12) der Scheibe gerichtet sind und mittels denen jeder Bremsklotz von der Scheibe eine Beaufschlagung in der direkten Drehrichtung (D) im Falle der Bremsung bei einer Vorwärtsfahrt des Fahrzeugs erfährt, wobei wenigstens eine erste und eine zweite der Innenaufnahmen (211, 221) und der Außenaufnahmen (212, 222) des vorderen Schenkels (21) und des hinteren Schenkels (22) Anschläge (611, 622) für die entsprechenden Enden der Bremsklötze bilden, die geeignet sind, einer Bewegung des inneren und des äußeren Bremsklotzes in der direkten Drehrichtung (D) entgegenzuwirken, **dadurch gekennzeichnet, daß** bei einer Beaufschlagung der Bremsklötze entlang der direkten Drehrichtung (D) nur eine erste der Innenaufnahme (211) und der Außenaufnahme (212) des vorderen Schenkels (21) einen vorderen Anschlag (611) für das vordere Ende nur eines ersten des inneren und des äußeren Bremsklotzes (51, 52) bildet, während nur eine zweite der Außenaufnahme (222) bzw. der Innenaufnahme (221) des hinteren Schenkels (22) einen hinteren Anschlag (622) für das hintere Ende nur eines zweiten des äußeren bzw. des inneren Bremsklotzes (52, 51) bildet, daß der vordere Schenkel (21) eine erste Steifigkeit (K1) bei einer auf den vorderen Anschlag (611) aufgebrachten Kraft aufweist, daß der hintere Anschlag (22) eine zweite Steifigkeit (K2) bei einer auf den hinteren Anschlag (622) aufgebrachten Kraft aufweist und daß das Verhältnis (K1/K2) von erster und zweiter Steifigkeit zwischen 0,80 und 1,25 liegt.

2. Scheibenbremse nach Anspruch 1, **dadurch gekennzeichnet, daß** das Verhältnis (K1/K2) von erster und zweiter Steifigkeit (K1, K2) zwischen 0,95 und 1,05 liegt.

3. Scheibenbremse nach Anspruch 1 oder Anspruch 2, **dadurch gekennzeichnet; daß** die erste Aufnahme die Innenaufnahme (211) des vorderen Schenkels (21) ist, daß die zweite Aufnahme die Außenaufnahme (222) des hinteren Schenkels (22) ist und daß das vordere Ende (511) des inneren Bremsklotzes (51) ein Halteprofil (513) aufweist, mittels welchem das vordere Ende (511) am vorderen Anschlag (611) der Innenaufnahme (211) des vorderen Schenkels (21) eingehängt ist, und daß das hintere Ende (522) des äußeren Bremsklotzes (52) am hinteren Anschlag (622) der äußeren Aufnahme (222) des hinteren Schenkels (22) anliegt.

4. Scheibenbremse nach Anspruch 1 oder Anspruch 2, **dadurch gekennzeichnet, daß** der vordere und der hintere Schenkel (21, 22) mit der Basis (23) des Halters durch eine vordere bzw. hintere Brücke (241, 242) verbunden sind, welche unterschiedliche Querschnitte (S1, S2) aufweisen, wobei eine erste der vorderen Brücke und der hinteren Brücke mit der Basis (23) den Schenkel verbindet, dessen Aufnahme einen Anschlag für den inneren Bremsklotz (51) bildet, und eine zweite der vorderen Brücke und der hinteren Brücke mit der Basis (23) den Schenkel verbindet, dessen Aufnahme einen Anschlag für den äußeren Bremsklotz (52) bildet, wobei die erste Brücke einen Querschnitt hat, der kleiner als der Querschnitt der zweiten Brücke ist.

5. Scheibenbremse nach Anspruch 4, **dadurch gekennzeichnet, daß** die vordere Brücke (241) ein unteres Ende (241a) aufweist, das in der Nähe der Basis (23) des Halters ist, und ein oberes Ende (241b), das entfernt von der Basis (23) ist, und daß das erste Führungsmittel (41) am oberen Ende (241b) der vorderen Brücke angeordnet ist.

6. Scheibenbremse nach einem der vorhergehenden Ansprüche, **dadurch gekennzeichnet, daß** die Scheibe zwei Halbräume (E+, E-) abgrenzt, von denen jeder zu einer der beiden Seiten (11, 12) der Scheibe gerichtet ist, und daß die erste Stange in die erste Bohrung durch eine Öffnung (411) der ersten Bohrung eindringt, die in dem Halbraum (E+, E-) angeordnet ist, in welchem sich der vordere Anschlag (611) befindet.

7. Scheibenbremse nach einem der vorhergehenden Ansprüche, **dadurch gekennzeichnet, daß** sie ein drittes und ein viertes Führungsmittel (43, 44) aufweist, die an dem Halter (2) bzw. an dem Bremssattel (3) vorgesehen sind und von denen eines eine zweite Bohrung und das andere eine zweite Stange ist, die in der zweiten Bohrung gleitet, und daß die zweite Stange in die zweite Bohrung durch eine Öffnung (431) der zweiten Bohrung eindringt, die in dem Halbraum (E+, E-) angeordnet ist, in welchem sich der hintere Anschlag (622) befindet.

8. Scheibenbremse nach einem der vorhergehenden Ansprüche, **dadurch gekennzeichnet, daß** der vordere und der hintere Schenkel (21, 22) miteinander nur durch die Basis (23) des Halters verbunden sind.

## Claims

1. Disc brake for a motor vehicle, comprising: a disc (1) which has an inboard face (11) and an outboard face (12), this disc rotating about a transverse axis (X) in a direct sense of rotation (D) when the vehicle is travelling forward; a carrier (2) comprising an upstream branch (21) and a downstream branch (22) straddling the disc (1) and secured to a common base (23) which is fixed to the vehicle facing the inboard face (11) of the disc, the downstream branch (22) following on from the upstream branch (21) in the direct sense of rotation (D) of the disc, and each branch having an inboard housing (211, 221) and an outboard housing (212, 222) which are situated one on each side of the disc (1); a caliper (3) straddling the disc (1) and mounted so that it can slide relative to the carrier (2) in a transverse direction (T) parallel to the transverse axis (X), this caliper (3) comprising a jaw (32) pointing towards the outboard face (12) of the disc, and a cylinder (31) closed by a piston (311) and pointing towards the inboard face (11) of the disc; first and second guide means (41, 42) provided respectively on the carrier (2) and on the caliper (3), one of the guide means (41, 42) consisting of a first bore, and the other consisting of a first pin sliding in the first bore; and a pair of friction pads, this pair being formed of an inboard pad (51) and of an outboard pad (52) placed respectively, in the transverse direction (T), between the piston (311) and the inboard face (11) of the disc, and between the outboard face (12) of the disc and the jaw (32) of the caliper, the inboard pad (51) having an upstream end (511) and a downstream end (512) which are mounted so that they can slide in the respective inboard housings (211, 221) of the upstream and downstream branches (21, 22), and the outboard pad (52) having an upstream end (521) and a downstream end (522) which are mounted so that they can slide in the respective outboard housings (212, 222) of the upstream and downstream branches (21, 22), the inboard and outboard pads (51, 52) bearing, between their respective ends, respective friction linings (510, 520) pointing towards the inboard and outboard faces (11, 12) of the disc and by means of which each pad is urged by the disc in the direct sense of rotation (D) in the event of braking while the vehicle is travelling forwards, a first and a second at least of the said inboard and outboard housings (211, 212, 221, 222) of the upstream and downstream branches (21, 22) forming stops (611, 622) for the respective ends of the pads, these stops being capable of opposing a movement of the inboard and outboard pads in the direct sense of rotation (D), **characterized in that** when the pads are urged in the direct sense of rotation (D), just a first of the inboard and outboard housings (211, 212) of the upstream branch (21) forms an upstream stop (611) for the upstream end of just a first one of the inboard and outboard pads (51, 52), while just a second one of the outboard and inboard housings (222, 221) respectively of the downstream branch (22) forms a downstream stop (622) for the downstream end of just a second one of the outboard and inboard pads (52, 51) respectively, **in that** the upstream branch (21) has a first stiffness (K1) for a force applied to the upstream stop (611), **in that** the downstream branch (22) has a second stiffness (K2) for a force applied to the downstream stop (622), and **in that** the ratio (K1/K2) between the first and second stiffnesses is between 0.80 and 1.25.

2. Disc brake according to Claim 1, **characterized in that** the ratio (K1/K2) between the first and second stiffnesses (K1, K2) is between 0.95 and 1.05.

3. Disc brake according to Claim 1 or 2, **characterized in that** the first housing is the inboard housing (211) of the upstream branch (21), **in that** the second housing is the outboard housing (222) of the downstream branch (22), and **in that** the upstream end (511) of the inboard pad (51) has a retaining profile (513) via which this upstream end (511) is caught on the upstream stop (611) of the inboard housing (211) of the upstream branch (21) and **in that** the downstream end (522) of the outboard pad (52) bears against the downstream stop (622) of the outboard housing (222) of the downstream branch (22).

4. Disc brake according to Claim 1 or 2, **characterized in that** the upstream and downstream branches (21, 22) are connected to the base (23) of the carrier by respective upstream and downstream bridges (241, 242) which have different cross-sections (S1, S2), a first of the upstream and downstream bridges connecting to the base (23) that branch one of whose housings forms a stop for the inboard pad (51), and a second of the upstream and downstream bridges connecting to the base (23) that branch one of whose housings forms a stop for the outboard pad (52), the first bridge having a cross-section smaller than the cross-section of the second bridge.

5. Disc brake according to Claim 4, **characterized in that** the upstream bridge (241) has a lower end (241a) adjoining the base (23) of the carrier and an upper end (241b) distant from the base (23), and **in that** the first guide means (41) is located at the upper end (241b) of the upstream bridge.

6. Disc brake according to any one of the preceding claims, **characterized in that** the disc delimits two half-spaces (E+, E-) each of which points towards one of the two faces (11, 12) of the disc, and **in that** the first pin enters the first bore via an opening (411) of the first bore which lies in the half-space (E+, E-) in which the upstream stop (611) is situated.

7. Disc brake according to any one of the preceding claims, **characterized in that** it comprises a third and a fourth guide means (43, 44) provided respectively on the carrier (2) and on the caliper (3), and one of which is a second bore and the other of which is a second pin sliding in the second bore, and **in that** the second pin enters the second bore via an opening (431) of the second bore which lies in the half-space (E+, E-) in which the downstream stop (622) is situated.

8. Disc brake according to any one of the preceding claims, **characterized in that** the upstream branch and the downstream branch (21, 22) are only joined together by the base (23) of the carrier.
